# EUROPÄISCHE PATENTANMELDUNG

(11) **EP 1 450 099 A2**
(43) Veröffentlichungstag der Anmeldung: **25.08.2004**
(21) Anmeldenummer: 04002733.6
(22) Anmeldetag: 07.02.2004
(51) Int. Cl.: F21S 8/10

(54) **Projektions-Scheinwerfer für Fahrzeuge**

(30) Priorität: 18.02.2003 DE 10306890
(71) Anmelder: Hella KGaA Hueck & Co., 59552 Lippstadt (DE)
(72) Erfinder: Jablotschkin, Werner, 33142 Büren (DE); Döring, Berthold, 59457 Werl (DE)

(57) **Zusammenfassung**

Die Erfindung betrifft einen Scheinwerfer für Fahrzeuge mit einem Projektionsmodul, das im Inneren eines Gehäuses angeordnet ist und das einen Reflektor, ein Leuchtmittel und eine Linse aufweist. Am Gehäuse ist ein Traggestell gehaltert. Über mindestens ein Lager ist zumindest die Linse des Projektionsmoduls am Traggestell gehaltert. Durch eine Stellvorrichtung ist zumindest die Linse um eine von dem Lager definierte vertikale Achse für Kurvenlicht schwenkbar. Die Linse des Projektionsmoduls ist von einer an dem Projektionsmodul gehalterten ringförmigen Blende umgeben. Die Blende ist von einem kugelförmigen Mantelflächenabschnitt gebildet, dessen Mittelpunkt auf dem Schnittpunkt von der vertikalen und optischen Achse des Projektionsmoduls liegt. Der Linse ist einer in eine Abdeckblende eingebrachten Durchgangsöffnung zugeordnet, deren umlaufender Rand zusammen mit der ringförmigen Blende einen umlaufenden Spalt begrenzt.

## Beschreibung

Die Erfindung betrifft einen Scheinwerfer für Fahrzeuge mit einem Gehäuse, das im vorderen Bereich eine lichtdurchlässige Abschlussscheibe aufweist, mit einem im Inneren des Gehäuses angeordneten Projektionsmodul, das einen Reflektor, ein dem Reflektor zugeordnetes Leuchtmittel und eine im vom Reflektor reflektierten Lichtbündel angeordnete Linse aufweist, mit einem am Gehäuse gehalterten Traggestell, mit mindestens einem Lager, das zumindest die Linse des Projektionsmoduls am Traggestell haltert und eine vertikale Achse definiert, die näher zum Reflektor als zur Linse angeordnet ist, und mit einer Stellvorrichtung durch die zumindest die Linse des Projektionsmoduls um die vertikale Achse für Kurvenlicht schwenkbar ist.

Ein Scheinwerfer dieser Art ist aus der DE - A - 198 02 023 A1 bekannt. Der Scheinwerfer weist ein topfförmiges Gehäuse auf, dessen vordere Seite von einer klaren lichtdurchlässigen Abschlussscheibe gebildet ist. Im Inneren des Gehäuses ist ein Projektionsmodul für Kurvenlicht angeordnet. Das Projektionsmodul ist über zwei Lager mit einem Traggestell verbunden. Die zwei Lager definieren eine vertikale Achse, die im vorderen Bereich des Reflektors des Projektionsmoduls verläuft und um die das Projektionsmodul durch eine fernbetätigbaren Steller schwenkbar ist. Das Traggestell ist wiederum über Lager mit einer Rückwand des Gehäuse verbunden und durch eine fernbetätigbaren Steller für eine Leuchtweiteregelung um eine horizontale Achse schwenkbar. Bei einem Blick durch die klare Abschlussscheibe ist das Scheinwerferinnere bis zum Tragrahmen hin zu sehen.

Aufgabe der Erfindung ist es, den im Oberbegriff des Anspruchs 1 beschriebenen Scheinwerfer für Fahrzeuge derart zu gestalten, dass die Sicht in das Scheinwerferinnere durch Abdeckelemente auch dann im Bereich des schwenkbaren Projektionsmoduls abgeschirmt ist, wenn wegen den Abschirmschwenkbaren Projektionsmoduls abgeschirmt ist, wenn wegen den Abschirmelementen keine größere Bautiefe des Scheinwerfers notwendig ist und zumindest bei ausgeschaltetem Scheinwerfer der von außen sichtbare Bereich des Projektionsmoduls in seinen Abmessungen größer als die verhältnismäßig kleine Linse erscheint. Diese Aufgabe wird nach der Erfindung dadurch gelöst, dass
- die Linse des Projektionsmoduls von einer an dem Projektionsmodul gehalterten ringförmigen Blende umgeben ist,
   - die Blende von einem kugelförmigen Mantelflächenabschnitt gebildet ist, dessen Mittelpunkt im Bereich des Schnittpunktes von der vertikalen Achse und der optischen Achse des Projektionsmoduls liegt,
   - der Linse eine in eine Abdeckblende eingebrachte Durchgangsöffnung zugeordnet ist, deren umlaufender Rand zusammen mit der ringförmigen Blende einen umlaufenden Spalt begrenzt.
Durch die kugelförmige Formgebung der Blende und die Lage der vertikalen Achse ergibt sich der kleinstmögliche Spalt zwischen der Abdeckblende und der ringförmigen Blende. Der Spalt bleibt beim Schwenken des Projektionsmoduls gleich groß. In diesem Zusammenhang ist es vorteilhaft, wenn der Spalt umlaufend gleich breit ist. Das Tagerscheinungsbild der ringförmigen Blende kann durch die Wahl des Materials, der Oberflächengüte (glatt oder rau), der Oberflächenbeschichtung (teiltransparent oder vollflächig beschichtet), der Farbe des Designelements und/oder durch den Einsatz von applizierten Optiken variieren. Es kann das gesamte Projektionsmodul oder die Linse ohne den Reflektor um die vertikale Achse schwenkbar sein.

Die ringförmige Blende bzw. die Lage der vertikalen Achse hat keinen Einfluss auf die Formgebung der Abdeckblende, wenn der Rand der Durchgangsöffnung der Abdeckblende benachbart zur Blende auf der der Abschlussscheibe zugewandten Seite der Blende angeordnet ist. Dadurch kann die ringförmige Blende sehr nahe dem Rand der Durchgangsöffnung angeordnet sein.

Damit die Lichtaustrittsfläche auch bei eingeschaltetem Licht des Projektionsmoduls größer erscheint, ist es vorteilhaft, wenn das Projektionsmodul zwischen dem Reflektor und der Linse mindestens einen nach außen offene Bereich aufweist, durch den Restlichtstrahlen des Leuchtmittels hindurchgehen und auf die Innenseite der Blende auftreffen, die aus lichtdurchlässigem Material besteht und mit ihrem äußeren Rand zur Rückseite des Scheinwerfers hin weist. Die Blende dient zur Umfeldaufhellung der Linse. Bei einem Scheinwerfer ohne beleuchtbare Blende müssten diese Restlichtstrahlen abgeblockt bzw. vernichtet werden, um eine unerwünschte Blendung zu vermeiden. Die Blende kann durch die Verwendung verschiedener Materialien wie zum Beispiel diffus streuender und/oder farbiger Kunststoffen, einer strukturierten Oberfläche (Prismenstrukturen, Kissenoptiken etc.) und/oder einer teilbeschichteten Oberfläche auf den beleuchteten Oberflächen zum Leuchten gebracht werden.

Besonders vorteilhaft ist es, wenn die lichtdurchlässige Blende auf der dem Reflektor zugewandten Seite mindestens einen zum Reflektor gerichteten Rand aufweist, dessen Stirnfläche als Lichteinkoppelfläche dient. Dadurch ist die Blende über ihre gesamte Ausdehnung weitestgehend homogen ausleuchtbar.

Das Projektionsmodul ist einfach und kostengünstig herstellbar und die Blende ist ausreichend hell ausgeleuchtet, wenn die direkt von dem Leuchtmittel ausgehenden und zur Blende hin gerichteten Restlichtstrahlen durch die offenen Bereiche des Projektionsmoduls hindurchgehen und die von dem Reflektor reflektierten und zur Blende hin gerichteten Restlichtstrahlen durch die offenen Bereiche des Projektionsmoduls hindurchgehen.

Nach einer bevorzugten Ausführungsform besteht die Blende aus die Sicht in des Innere des Scheinwerfers abschirmenden Material, welches farblich gestaltbar und lichtdurchlässig ist. Dadurch weist der Scheinwerfer ein besonderes Erscheinungsbild auf.

Befestigungselement der Linse sind vollständig abgedeckt und die Blende ist bis zur hell erleuchten Linse beleuchtet, wenn die ringförmige Blende von der vorderen Seite des Scheinwerfers her gesehen mit dem inneren Rand der Blende an die Linse angrenzt.

Weiterhin ist es vorteilhaft, wenn die Blende so große Außenabmessungen aufweist, dass in den äußeren Schwenkstellungen des Projektionsmoduls die Blende eine Sicht in Fahrzeuglängsrichtung in das Scheinwerferinnere abschirmt. Auch dadurch muss der Scheinwerfer in seiner Bautiefe nicht größer bauen.

Nach einer Weiterbildung der Erfindung ist im Bereich des äußeren Randes der ringförmigen Blende zwischen der Blende und der Abdeckende eine Zwischenblende mit einer Öffnung angeordnet, deren Innenrand zusammen mit der Blende einen umlaufenden Spalt begrenzt. Dadurch ist auch bei einem größeren Spalt zwischen der Blende und dem Rand der Durchgangsöffnung der Abdeckblende die Sicht in das Innere des Scheinwerfers abgeschirmt und von Blende ist auch bei einem schrägen Blick auf den Scheinwerfer viel zu sehen.

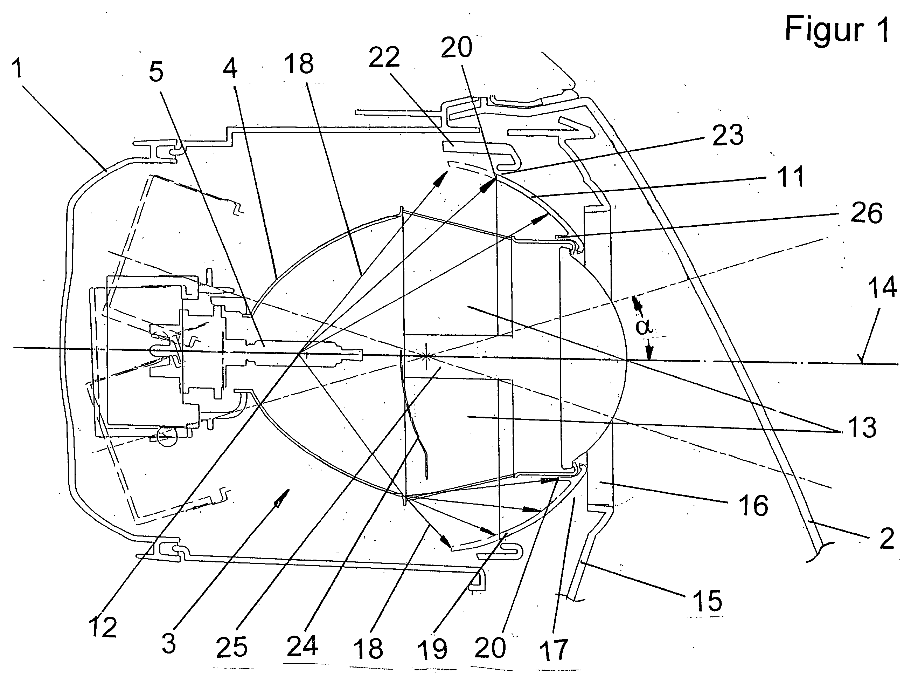

Ein Ausführungsbeispiel nach der Erfindung ist in der Zeichnung dargestellt und zwar zeigen
Figur 1 in einem horizontalen mittleren Längsschnitt einen Scheinwerfer für Fahrzeuge mit einem Projektionsmodul für Kurvenlicht, einer Abdeckblende und einer eine Linse des Projektionsmoduls umgebenden ringförmigen Blende und

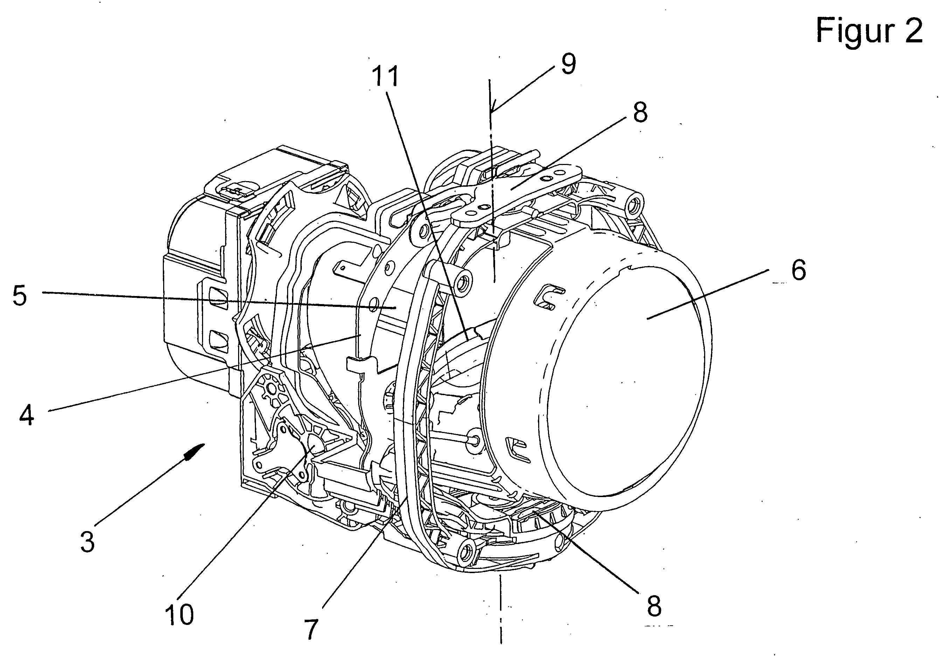

Figur 2 in einer perspektivischen Ansicht das Projektionsmodul mit einem Tragrahmen.

Der Scheinwerfer für Fahrzeuge weist ein aus Kunststoff bestehendes Gehäuse 1 auf, das auf der vorderen Seite eine lichtdurchlässige Abschlussscheibe 2 aufweist. Im Inneren des Gehäuses 1 ist ein Projektionsmodul 3 angeordnet. Das Projektionsmodul 3 besteht aus einem elliptischen Reflektor 4, einem Leuchtmittel 5, einer Linse 6 und einem Blendenteil 24, welches zur Erzeugung eines abgeblendeten Lichtbündels dient. Die Linse 6 ist von einem Halter 25 getragen, der über Tragbeine mit dem vorderen Rand des Reflektors 4 verbunden ist. Die Tragbeine des Halters 25 begrenzen offene Bereiche 13 des Projektionsmoduls 3. Als Leuchtmittel 5 dient entweder eine Halogenlampe oder eine Gasentladungslampe. Das Projektionsmoduls 3 ist über ein oberes und unteres Lager 8 an einem Traggestell 7 gehaltert. Die beiden Lager 8 definieren eine vertikale Achse 9, um die das Projektionsmodul 3 für Kurvenlicht schwenkbar ist. Eine fernbetätigbare Stellvorrichtung 10 für Kurvenlicht stellt eine Verbindung zwischen dem Projektionsmodul 3 und dem Traggestell 7 dar. Das Projektionsmodul 3 ist aus seiner Normallage heraus nach beiden Seiten jeweils um einen Winkel α von maximal 15 ° schwenkbar. Das Traggestell 7 ist über Lagerstellen mittelbar oder unmittelbar mit dem Gehäuse 1 verbunden und durch einen fernbetätigbaren Steller zur Leuchtweiteregelung um eine horizontale Achse schwenkbar (nicht dargestellt). Die Linse 6 des Projektionsmoduls 3 ist von einer Blende 11 umgeben, die aus einem blauen lichtdurchlässigen Kunststoff besteht. Die vordere Seite der Blende 11 ist von einem kugelförmigen Mantelflächenabschnitt gebildet und ist in Richtung der optischen Achse 14 des Projektionsmoduls 3 kreisringförmig. Der Mittelpunkt 12 des kugelförmigen Mantelflächenabschnitts liegt im Schnittpunkt von der optischen Achse 14 und der vertikalen Achse 9. Die Blende 11 grenzt mit dem inneren Rand 19 an die vordere konvexe Seite der Linse 6 an. Eine Abdeckblende 15 ist unverstellbar mit dem Gehäuse 1 verbunden und deckt die Sicht auf den rückwärtigen inneren Bereich des Gehäuses 1 ab. Die Abdeckende 15 weist eine kreisrunde Durchgangsöffnung 16 auf, deren umlaufender nach hinten gerichteter Rand zusammen mit der ringförmigen Blende 11 einen Spalt 17 begrenzt, der umlaufend gleich breit ist. Am äußeren Rand der Blende 11 ist benachbart zur vorderen Seite der Blende 11 eine mit dem Traggestell 7 verbundene Zwischenblende 22 mit einer Öffnung angeordnet, dessen umlaufender Rand zusammen mit der Blende 11 einen Spalt 23 begrenzt. Bei eingeschalteten abgeblendeten Licht des Projektionsmoduls 3 gehen Restlichtstrahlen 18 des Leuchtmittels 5 durch die offenen Bereiche 13 des Projektionsmoduls 3 hindurch und treffen auf die Rückseite der lichtdurchlässigen blaue Blende 11 auf und erhellen diese. Die Restlichtstrahlen 18 sind entweder direkt von dem Leuchtmittel 5 ausgehend nach vorn hin gerichtet oder an dem umlaufenden Randbereich des Reflektors 4 gestreut reflektiert. Die Restlichtstrahlen 18 gehen durch die offenen Bereiche 13 des Projektionsmoduls 3 hindurch und erhellen die Blende 11. Einige der Restlichtstrahlen treffen auf Lichteinkoppelflächen der Blend 11 auf, die von der Stirnfläche 20 des äußeren Randes der Blende 11 und einer an den Halter 25 der Linse 6 angrenzenden Fixierungsrippe 26 gebildet ist.

### Bezugszeichenliste:

- 1.: Gehäuse
- 2.: Abschlussscheibe
- 3.: Projektionsmodul
- 4.: Reflektor
- 5.: Leuchtmittel
- 6.: Linse
- 7.: Traggestell
- 8.: Lager
- 9.: vertikale Achse
- 10.: Stellvorrichtung
- 11.: Blende
- 12.: Mittelpunkt
- 13.: offener Bereich
- 14.: optische Achse
- 15.: Abdeckblende
- 16.: Durchgangsöffnung
- 17.: Spalt
- 18.: Restlichtstrahlen
- 19.: äußerer Rand
- 20.: Stirnfläche
- 21.: innerer Rand
- 22.: Zwischenblende
- 23.: Spalt
- 24.: Blendenteil
- 25.: Halter
- 26.: Fixierungsrippe

## Patentansprüche

1. Scheinwerfer für Fahrzeuge mit einem Gehäuse (1), das im vorderen Bereich eine lichtdurchlässige Abschlussscheibe (2) aufweist, mit einem im Inneren des Gehäuses angeordneten Projektionsmodul (3), das einen Reflektor (4), ein dem Reflektor (4) zugeordnetes Leuchtmittel (5) und eine im vom Reflektor (4) reflektierten Lichtbündel angeordnete Linse (6) aufweist, mit einem am Gehäuse (1) gehalterten Traggestell (7) für das Projektionsmodul (3), mit mindestens einem Lager (8), das das Projektionsmodul (3) am Traggestell (7) haltert und für eine vertikale Achse (9) definiert, die näher zum Reflektor (4) als zur Linse (6) angeordnet ist, und mit einer Stellvorrichtung (10) durch die das Projektionsmodul (3) um die vertikale Achse (9) für Kurvenlicht schwenkbar ist, **dadurch gekennzeichnet, dass**
- die Linse (6) des Projektionsmoduls (3) von einer an dem Projektionsmodul (3) gehalterten ringförmigen Blende (11) umgeben ist,
- die Blende (11) von einem kugelförmigen Mantelflächenabschnitt gebildet ist, dessen Mittelpunkt (12) im Bereich des Schnittpunktes von der vertikalen Achse (13) und der optischen Achse (14) des Projektionsmoduls (3) liegt,
- der Linse (6) einer in eine Abdeckende (15) eingebrachten Durchgangsöffnung (16) zugeordnet ist, deren umlaufender Rand zusammen mit der ringförmigen Blende (11) einen umlaufenden Spalt (17) begrenzt.

2. Scheinwerfer nach Anspruch 1, **dadurch gekennzeichnet, dass** der Spalt (17) umlaufend gleich breit ist.

3. Scheinwerfer nach Anspruch 1 oder 2, **dadurch gekennzeichnet, dass** der Rand der Durchgangsöffnung (16) der Abdeckblende(15) benachbart zur Blende (11) auf der der Abschlussscheibe (2) zugewandten Seite der bart zur Blende (11) auf der der Abschlussscheibe (2) zugewandten Seite der Blende (11) angeordnet ist.

4. Scheinwerfer nach einem der Ansprüche 1 bis 3, **dadurch gekennzeichnet, dass** das Projektionsmodul (3) zwischen dem Reflektor (4) und der Linse (6) mindestens einen nach außen offene Bereich (13) aufweist, durch den Restlichtstrahlen (18) des Leuchtmittels (5) hindurchgehen und auf die Innenseite der Blende (11) auftreffen, die aus lichtdurchlässigem Material besteht und mit ihrem äußeren Rand (19) zur Rückseite des Scheinwerfers hin weist.

5. Scheinwerfer nach Anspruch 4, **dadurch gekennzeichnet, dass** die direkt von dem Leuchtmittel (5) ausgehende und zur Blende (11) hin gerichtete Restlichtstrahlen (18) durch den offenen Bereich (13) des Projektionsmoduls (3) hindurchgehen.

6. Scheinwerfer nach Anspruch 4 oder 5, **dadurch gekennzeichnet, dass** die von dem Reflektor (4) reflektierten und zur Blende (11) hin gerichteten Restlichtstrahlen (18) durch den offenen Bereich (13) des Projektionsmoduls (3) hindurchgehen.

7. Scheinwerfer nach einem der Ansprüche 4 bis 6, **dadurch gekennzeichnet, dass** die Blende (11) aus die Sicht in des Innere des Scheinwerfers abschirmenden Material besteht.

8. Scheinwerfer nach einem der Ansprüche 1 bis 7, **dadurch gekennzeichnet, dass** die Blende (11) von einer farblich gestaltbaren lichtdurchlässigen Abdeckung gebildet ist.

9. Scheinwerfer nach einem der Ansprüche 1 bis 8, **dadurch gekennzeichnet, dass** die lichtdurchlässige Blende (11) auf der dem Reflektor (4) zugewandten Seite mindestens einen zum Reflektor (4) gerichteten Rand aufweist, dessen Stirnfläche (20) als Lichteinkoppelfläche dient.

10. Scheinwerfer nach einem der Ansprüche 1 bis 9, **dadurch gekennzeichnet, dass** die ringförmige Blende (11) von der vorderen Seite des Scheinwerfers her gesehen mit ihrem inneren Rand (21) an die Linse (6) angrenzt.

11. Scheinwerfer nach einem der Ansprüche 1 bis 10, **dadurch gekennzeichnet, dass** die Blende (11) so große Außenabmessungen aufweist, dass auch in den äußeren Schwenkstellungen des Projektionsmoduls (3) die Blende (11) eine Sicht in Fahrzeuglängsrichtung in das Scheinwerferinnere abschirmt.

12. Scheinwerfer nach einem der Ansprüche 1 bis 11, **dadurch gekennzeichnet, dass** im Bereich des äußeren Randes (19) der ringförmigen Blende (11) zwischen der Blende (11) und der Abdeckblende (15) eine Zwischenblende (22) mit einer Öffnung angeordnet ist, deren Innenrand zusammen mit der Blende (11) einen Spalt (23) begrenzt.
